# EUROPÄISCHE PATENTSCHRIFT

(11) **EP 4 032 446 B1**
(45) Veröffentlichungstag und Bekanntmachung des Hinweises auf die Patenterteilung: **18.03.2026**
(21) Anmeldenummer: 22151077.9
(22) Anmeldetag: 12.01.2022
(51) Int. Cl.: A47J 31/44, A47J 31/52

(54) **VERFAHREN UND STEUEREINHEIT ZUM BERECHNEN EINES GEFÄSSVOLUMENS EINES GEFÄSSES FÜR EINEN GETRÄNKEAUTOMATEN UND GETRÄNKEAUTOMAT**
METHOD, AUTOMATIC BEVERAGE MACHINE AND CONTROL UNIT FOR CALCULATING A VESSEL VOLUME OF A VESSEL FOR SAID AUTOMATIC BEVERAGE MACHINE
METHODE, MACHINE AUTOMATIQUE DE DISTRIBUTION DE BOISSONS ET UNITÉ DE COMMANDE POUR CALCULER UN VOLUME D'UN RÉCIPIENT POUR LADITE MACHINE AUTOMATIQUE DE DISTRIBUTION DE BOISSONS

(30) Priorität: 26.01.2021 BE 202105057
(43) Veröffentlichungstag der Anmeldung: 27.07.2022
(73) Patentinhaber: Miele & Cie. KG, 33332 Gütersloh (DE)
(72) Erfinder: Tembaak, Jutta, 49492 Westerkappeln (DE); Schmelter, Stefan, 33330 Gütersloh (DE)

(56) Entgegenhaltungen:
- EP-A1- 2 449 929
- EP-A1- 3 670 436
- US-B2- 7 353 850

## Beschreibung

Die Erfindung betrifft ein Verfahren und eine Steuereinheit zum Berechnen eines Gefäßvolumens eines Gefäßes für einen Getränkeautomaten sowie einen Getränkeautomaten.

Die EP 1 647 951 A1 und EP 3 670 436 A1 beschreiben beide einen Getränkebereiter, insbesondere eine Kaffeemaschine.

Der hier vorgestellte Ansatz stellt sich die Aufgabe, ein verbessertes Verfahren und eine verbesserte Steuereinheit zum Berechnen eines Gefäßvolumens eines Gefäßes für einen Getränkeautomaten sowie einen verbesserten Getränkeautomaten zu schaffen.

Erfindungsgemäß wird diese Aufgabe durch ein Verfahren gemäß Anspruch 1 und eine Steuereinheit gemäß Anspruch 10 zum Berechnen eines Gefäßvolumens eines Gefäßes für einen Getränkeautomaten und durch einen Getränkeautomaten mit den Merkmalen der Hauptansprüche gelöst. Vorteilhafte Ausgestaltungen und Weiterbildungen der Erfindung ergeben sich aus den nachfolgenden Unteransprüchen.

Durch den hier vorgestellten Ansatz wird eine Möglichkeit geschaffen, um bei einer Getränkeausgabe eine Geschmacksintensität für ein Gefäß individuell einzustellen. Vorteilhafterweise können auch unsymmetrisch ausgeformte Gefäße dafür verwendet werden.

Erfindungsgemäß wird ein Verfahren zum Berechnen eines Gefäßvolumens eines Gefäßes für einen Getränkeautomaten vorgestellt. Das Verfahren umfasst einen Schritt des Erfassens einer Gefäßaußenhöhe des Gefäßes über eine Schnittstelle zu einer Sensoreinrichtung des Getränkeautomaten und einen Schritt des Ausgebens einer bestimmten Flüssigkeitsmenge über einen Auslauf des Getränkeautomaten in das Gefäß. Weiterhin umfasst das Verfahren einen Schritt des Ermittelns zumindest einer Restinnenhöhe des Gefäßes, wobei die Restinnenhöhe einen Restabstandswert zwischen einer Flüssigkeitsoberfläche der ausgegebenen Flüssigkeitsmenge in dem Gefäß und einem Gefäßrand repräsentiert, sowie einen Schritt des Berechnens des Gefäßvolumens unter Verwendung der bestimmten Flüssigkeitsmenge und der Restinnenhöhe.

Der Getränkeautomat kann beispielsweise als ein Kaffeevollautomat realisiert sein. Das Gefäß kann beispielsweise als eine Tasse, ein Becher oder beispielsweise als ein Glas realisiert sein. Die Gefäßaußenhöhe kann beispielsweise einen Abstand von einer Gefäßstandfläche bis zu dem Gefäßrand bezeichnen. Die Sensoreinrichtung kann beispielsweise an einem Auslauf des Getränkeautomaten angeordnet sein. Die Flüssigkeit kann beispielsweise ein Heißgetränk sein. Vorteilhafterweise kann auch das Gefäßvolumen eines unregelmäßig ausgeformten Gefäßes berechnet werden, sodass vorteilhafterweise sowohl eine ausgegebene Getränkemenge als auch eine Geschmacksintensität des ausgegebenen Getränks an das Gefäßvolumen angepasst werden kann.

Gemäß einer Ausführungsform kann das Verfahren einen Schritt des Ermittelns einer Gefäßinnenhöhe des Gefäßes unter Verwendung der Gefäßaußenhöhe nach dem Schritt des Erfassens der Gefäßaußenhöhe umfassen, wobei die Gefäßinnenhöhe einen Innenabstandswert zwischen einem Gefäßboden und dem Gefäßrand des Gefäßes repräsentiert. Vorteilhafterweise kann der Schritt des Ermittelns der Gefäßinnenhöhe vor dem Schritt des Ausgebens der Flüssigkeit durchgeführt werden. Auf diese Weise kann eine Dicke des Innenbodens ermittelt und bei der Ermittlung des Gefäßvolumens berücksichtigt werden.

Weiterhin kann im Schritt des Berechnens ein Wahrscheinlichkeitswert für das Gefäßvolumen berechnet werden. Vorteilhafterweise kann dadurch ein Mischverhältnis für beispielsweise ein auszugebendes Getränk abgeschätzt oder bestimmt werden.

Gemäß einer Ausführungsform kann im Schritt des Ausgebens die bestimmte Flüssigkeitsmenge ausgegeben werden, die zwischen 4 ml und 12 ml umfassen kann, insbesondere wobei die Flüssigkeitsmenge 8 ml umfasst. Die Flüssigkeitsmenge kann vorteilhafterweise von einem Durchflusssensor des Getränkeautomaten kontrolliert werden. Die Flüssigkeitsmenge von 8 ml kann beispielsweise zwei Impulsen des Durchflusssensors entsprechen. Durch eine derart geringe Flüssigkeitsmenge kann vorteilhaft eine in geringen Stufen Ermittlung des Gefäßvolumens erfolgen.

Das Verfahren kann einen Schritt des Bereitstellens eines Einstellsignals an eine Schnittstelle zu einem Brühgutliefereinheit des Getränkeautomaten unter Verwendung des Restabstandswerts umfassen, um eine Brühgutmenge für eine Getränkeausgabe in das Gefäß einzustellen. Die Brühgutliefereinheit kann vorteilhafterweise eine Brüheinheit und zusätzlich oder alternativ ein Mahlwerk des Getränkeautomaten aufweisen. Vorteilhafterweise kann mittels des Einstellsignals eine Intensität des auszugebenden Getränks eingestellt werden.

Gemäß einer Ausführungsform kann im Schritt des Bereitstellens durch das Einstellsignal die Brühgutmenge während eines Brühvorgangs eingestellt oder verändert werden, um den Geschmack eines Getränks anzupassen. Vorteilhafterweise kann dadurch ein aufwendiges Anlernen des Getränkeautomaten vermieden oder zumindest verkürzt werden.

Ferner kann das Verfahren einen Schritt des Speicherns des berechneten Gefäßvolumens umfassen. Vorteilhafterweise kann dadurch ein erneutes Ermitteln und Berechnen von Parametern für das bereits verwendete Gefäß vermieden werden. Die zu speichernden Daten können vorteilhafterweise in einer Speichereinheit hinterlegt werden.

Gemäß einer Ausführungsform kann das Verfahren einen weiteren Schritt des Ausgebens einer vorbestimmten weiteren Flüssigkeitsmenge und einen weiteren Schritt des Ermittelns zumindest einer weiteren Restinnenhöhe umfassen, wobei die weitere Restinnenhöhe einen Flüssigkeitsabstandswert zwischen der Flüssigkeitsoberfläche und dem Gefäßrand repräsentiert. Dabei kann die weitere Restinnenhöhe kleiner sein als die Restinnenhöhe. Im Schritt des Berechnens kann das Gefäßvolumen unter Verwendung der bestimmten weiteren Flüssigkeitsmenge und zusätzlich oder alternativ der weiteren Restinnenhöhe berechnet werden. Vorteilhafterweise kann dadurch ein Mischverhältnis oder eine Intensität des Getränks auch für unsymmetrisch ausgeformte Gefäße angepasst werden. Weiterhin kann vorteilhafterweise ein Füllvorgang durch das wiederholte Ermitteln und Berechnen kontrolliert werden.

Der weitere Schritt des Ermittelns der weiteren Restinnenhöhe kann nach einem Ablauf einer angegebenen Zeitspanne durchgeführt werden, insbesondere wobei die angegebene Zeitspanne 0,5 bis 1 Sekunde betragen kann. Vorteilhafterweise kann dadurch ein Überlaufen des Gefäßes vermieden werden.

Erfindungsgemäß ist eine Steuereinheit, die mit einer Sensoreinrichtung eines Getränkeautomaten verbunden und ausgebildet ist, um die Schritte des Verfahrens gemäß Anspruch 1 anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Steuereinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Ferner wird ein Getränkeautomat zum Ausgeben eines Getränks in ein Gefäß vorgestellt, wobei der Getränkeautomat eine Sensoreinrichtung zum Erfassen einer Gefäßaußenhöhe des Gefäßes, einen Auslauf zum Ausgeben einer Flüssigkeit in das Gefäß und eine Steuereinheit in einer zuvor genannten Variante aufweist.

Der Getränkeautomat ist beispielsweise als ein Kaffeevollautomat oder als ein Heißgetränkeautomat realisiert, der beispielsweise sowohl als Haushaltgerät zu privaten Zwecken als auch als gewerbliches oder professionelles Gerät in der Gastronomie eingesetzt werden kann. Das Getränk kann beispielsweise ein Kaffeegetränk sein. Der Auslauf ist beispielsweise ausgebildet, um das zubereitete Getränk an das Gefäß auszugeben. Der Auslauf kann vorteilhafterweise in einer Ruheposition in einem vorbestimmten Abstand zu einer Abstellfläche, auf die das Gefäß abstellbar ist, angeordnet sein.

Gemäß einer Ausführungsform kann die Sensoreinrichtung ausgebildet sein, um mittels einer Wippe, eines Lichtsensors und zusätzlich oder alternativ mittels Motorstrom die Gefäßaußenhöhe zu erfassen. Unter einer Wippe kann vorliegend beispielsweise ein Kontaktsensor oder Berührungssensor verstanden werden, der ein Signal abgibt, wenn er in mechanischem Kontakt mit dem Gefäßaußenrand gelangt. Vorteilhafterweise kann die Gefäßaußenhöhe unter Berücksichtigung des Abstands zu einer Abstellfläche des Getränkeautomaten ermittelt werden.

Ein Ausführungsbeispiel der Erfindung ist in den Zeichnungen rein schematisch dargestellt und wird nachfolgend näher beschrieben. Es zeigt
- Figur 1: eine schematische Querschnittsdarstellung eines Getränkeautomaten gemäß einem Ausführungsbeispiel;
- Figur 2: eine perspektivische Darstellung eines Ausführungsbeispiels Getränkeautomaten;
- Figur 3: eine schematische Darstellung eines Gefäßes gemäß einem Ausführungsbeispiel;
- Figur 4: ein Ablaufdiagramm eines Verfahrens gemäß einem Ausführungsbeispiel zum Berechnen eines Gefäßvolumens eines Gefäßes für einen Getränkeautomaten; und
- Figur 5: ein Blockschaltbild einer Steuereinheit für einen Getränkeautomaten gemäß einem Ausführungsbeispiel.

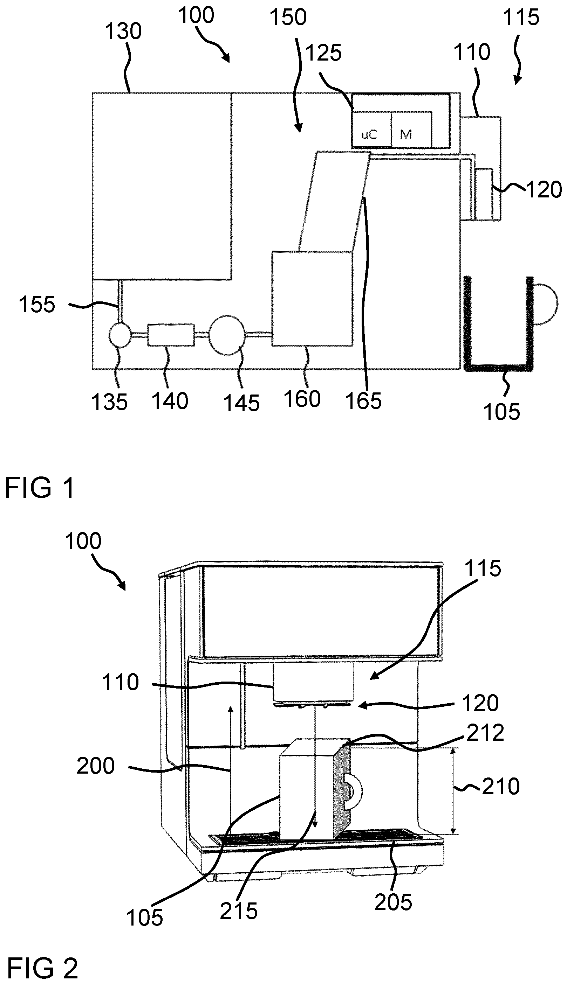

Figur 1 zeigt eine schematische Querschnittsdarstellung eines Getränkeautomaten 100 gemäß einem Ausführungsbeispiel. Der Getränkeautomat 100 ist als ein Kaffeevollautomat realisiert oder realisierbar. Der Getränkeautomat 100 ist ausgeformt, um ein Getränk in ein Gefäß 105 auszugeben. Dazu weist der Getränkeautomat 100 einen Auslauf 110 zum Ausgeben einer Flüssigkeit, beispielsweise das Getränk, in das Gefäß 105 auf. Der Auslauf 110 ist dabei gemäß diesem Ausführungsbeispiel in einer Ruheposition 115 in einem definierten Abstand zu einer hier nicht dargestellten Abstellfläche angeordnet. Der Getränkeautomat 100 weist weiterhin eine Sensoreinrichtung 120 zum Erfassen einer Gefäßaußenhöhe des Gefäßes 105 und eine Steuereinheit 125 auf. Die Steuereinheit 125 ist dabei ausgebildet, um ein Verfahren zum Berechnen eines Gefäßvolumens des Gefäßes 105 für den Getränkeautomaten 100 anzusteuern und/oder durchzuführen, wie es in einer der nachfolgenden Figuren näher beschrieben wird.

Gemäß diesem Ausführungsbeispiel ist die Sensoreinrichtung 120 ausgebildet, um mittels einer Wippe, eines Lichtsensors und/oder mittels Motorstrom die Gefäßaußenhöhe zu erfassen. Des Weiteren weist der Getränkeautomat 100 gemäß diesem Ausführungsbeispiel einen Flüssigkeitsbehälter 130, einen Durchflusssensor 135, eine Pumpeinrichtung 140 eine Heizeinrichtung 145 sowie eine Brühgutliefereinheit 150 auf. Diese Komponenten sowie der Auslauf 110 des Getränkeautomaten 100 sind gemäß diesem Ausführungsbeispiel mittels eines Leitungssystems 155 miteinander verbunden, das beispielsweise eine Mehrzahl von Leitungen und/oder Schläuchen umfasst. Die Steuereinheit 125 ist ausgebildet, um die Komponenten des Getränkeautomaten 100 anzusteuern.

Der Flüssigkeitsbehälter 130 wird beispielsweise auch als Wassertank bezeichnet und ist ausgebildet, um eine Flüssigkeit wie Wasser zu bevorraten. Der Durchflusssensor 135 ist ausgebildet, um eine durch das Leitungssystem 155 fließende Flüssigkeitsmenge beispielsweise mittels Impulsen, die jeweils 4 ml der Flüssigkeit umfassen, zu messen. Die Pumpeinrichtung 140 ist ausgebildet, um die Flüssigkeit durch das Leitungssystem 155 zu pumpen. Dabei pumpt die Pumpeinrichtung 140 die Flüssigkeit aus dem Flüssigkeitsbehälter 130 in Richtung des Auslaufs 110. Die Heizeinrichtung 145 ist beispielsweise als ein Durchlauferhitzer realisierbar. Die Heizeinrichtung 145 ist ausgebildet, um die durch das Leitungssystem 155 gepumpte Flüssigkeit aufzuheizen, bevor sie die Brühgutliefereinheit 150 erreicht. Die Brühgutliefereinheit 150 weist gemäß diesem Ausführungsbeispiel ein Mahlwerk 160 zum Mahlen von beispielsweise Kaffeebohnen, um Kaffeepulver zu erhalten, und/oder eine Brüheinheit 165 auf, die ausgebildet ist, um das Kaffeepulver unter Verwendung der erhitzten Flüssigkeit zu einem Kaffeegetränk zu brühen.

Im Allgemeinen wird die Sensoreinrichtung 120 eingesetzt, die beispielsweise zumindest einen Infrarot-Sensor (IR) umfasst. Der Infrarot-Sensor ist beispielsweise am verfahrbaren Auslauf 110 angebracht. Üblicherweise erfasst ein solcher Sensor einen Gefäßrand des Gefäßes 105 sowie ein Stück einer Gefäßinnenwand, sodass daraus auf eine Innenform des Gefäßes 105 geschlossen werden kann. Dies funktioniert jedoch nur bei rotationssymmetrischen Gefäßen 105 und intransparenten Materialien. Beispielsweise für Latte Macchiato werden in der Regel jedoch (transparente) Gläser verwendet und/oder unsymmetrische Gefäße 105, die mittels eines solchen Systems nicht erfasst werden können. Vor diesem Hintergrund wird anhand des hier vorgestellten Ansatzes eine Volumenerkennung sowie ein Anpassen des Geschmacks, der für ein Getränk festgelegt wurde, auf die Größe des Tassenvolumens ermöglicht, sodass der Kunde vorteilhafterweise ein gewünschtes Mischverhältnis für das entsprechende Getränk erhält.

In anderen Worten ausgedrückt wird eine dynamische Volumenerkennung während des Füllvorgangs für Gläser und unsymmetrische Gefäße 105 vorgestellt. Dazu ist die Sensoreinrichtung 120, die beispielsweise zumindest einen Infrarot-Sensor und/oder einen Ultraschallsensor umfasst, unterhalb des Auslaufes 110 derart angeordnet, dass er in das als Tasse realisierbare Gefäß 105 gerichtet ist. Durch beispielsweise eine Wippe und/oder einen Sensor, der ausgebildet ist, um die Gefäßhöhe zu erfassen, und durch Erfassen der Höhe eines Gefäßbodens ist ein Ermitteln der Gefäßinnenhöhe möglich.

Sobald die Flüssigkeitsmenge, beispielsweise Espresso, in das Gefäß 105 läuft, wird von dem Getränkeautomaten 100 aufgrund einer Füllhöhe der Flüssigkeit und der von dem Durchflusssensor 135 ausgegebenen Impulse das bisherige Gefäßvolumen berechnet. Der Durchflusssensor 135 ist beispielsweise auch als Flowmeter bezeichnet. Dieser Vorgang erfolgt lediglich optional in regelmäßigen Abständen. Darüber und über die Höhe des Gefäßes 105 berechnet der Getränkeautomat 100 eine Wahrscheinlichkeit, welches Innenvolumen das Gefäß 105 haben wird. Die errechnete Wahrscheinlichkeit wird beispielsweise alle 10 Impulse oder beispielsweise jeweils nach 0,5 Sekunden überprüft und gegebenenfalls korrigiert. Über diesen Abgleich ist das Gefäßvolumen selbst ungewöhnlicher Gefäße 105 und/oder von Gläsern bestimmbar.

Gemäß diesem Ausführungsbeispiel speichert der Getränkeautomat 100 das Gefäßvolumen des entsprechenden Gefäßes 105 ab. Sollte der Kunde lediglich optional erneut dieses Gefäß 105 unterstellen, erkennt der Getränkeautomat 100 bereits nach wenigen Millilitern, um welches Gefäß 105 es sich handelt und bereitet das passende Getränk mit dem passenden Geschmack zu. Das bedeutet, dass unter Verwendung der gespeicherten Daten ein Abgleich durchgeführt wird, um eine Gefäßform zu ermitteln und/oder das entsprechende Gefäßvolumen zu berechnen.

Der Geschmack oder beispielsweise eine Getränkeintensität ist ebenfalls anpassbar. Wird das Gefäß 105 beispielsweise zum ersten Mal verwendet und hat eine besondere Form, ist die Geschmackseinstellung in manchen Fällen nur eingeschränkt verbesserbar, da unter Umständen eine erhöhte Mahlmenge nicht mehr einstellbar ist. Nimmt der Kunde das Gefäß 105 ein weiteres Mal, lässt sich der Geschmack automatisch einstellen.

Figur 2 zeigt eine perspektivische Darstellung eines Ausführungsbeispiels Getränkeautomaten 100. Der hier dargestellte Getränkeautomat 100 entspricht oder ähnelt dem in Figur 1 beschriebenen Getränkeautomaten 100. Gemäß diesem Ausführungsbeispiel ist der Auslauf 110 in der Ruheposition 115 angeordnet, sodass ein Ruheabstand 200 zwischen dem Auslauf 110 und der Abstellfläche 205 des Getränkeautomaten 100 bekannt ist. Die Sensoreinrichtung 120, die lediglich optional eine Wippe umfasst, ist ausgebildet, um eine Gefäßaußenhöhe 210 zu erfassen. Die Gefäßaußenhöhe 210 entspricht dabei einem Abstand zwischen einem Gefäßboden und einem Gefäßrand 212 des Gefäßes 105. Das Gefäß 105 ist lediglich optional quaderartig ausgeformt. Die Sensoreinrichtung 120 ist weiterhin ausgebildet, um beispielsweise einen Messstrahl 215 in Form eines Lichtstrahls auszugeben und beispielsweise mittels einer Reflexion dessen einen Abstand zu einer Oberfläche des Gefäßes 105 und/oder zu einer Flüssigkeitsoberfläche zu erfassen. Dadurch ist gemäß diesem Ausführungsbeispiel eine Bodendicke des Gefäßes 105 ermittelbar. In anderen Worten ausgedrückt ist gemäß diesem Ausführungsbeispiel die Gefäßaußenhöhe 210 unter Verwendung des Ruheabstands 200 ermittelbar.

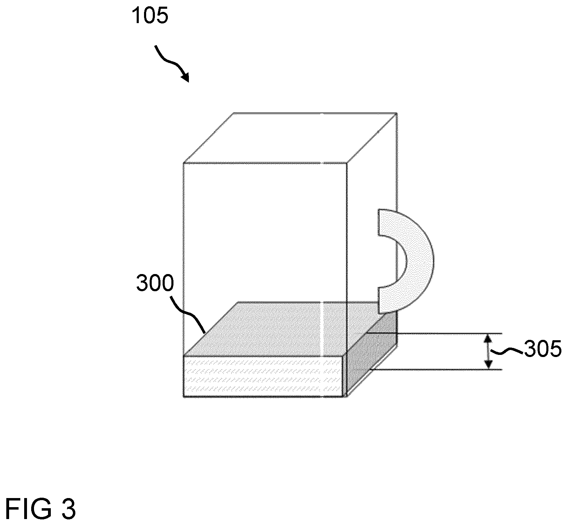

Figur 3 zeigt eine schematische Darstellung eines Gefäßes 105 gemäß einem Ausführungsbeispiel. Das hier dargestellte Gefäß 105 entspricht beispielsweise dem in einer der Figuren 1 oder 2 beschriebenen Gefäß 105. Gemäß diesem Ausführungsbeispiel ist das Gefäß 105 quaderartig ausgeformt, weist also einen viereckigen, insbesondere einen Quadratischen Grundriss auf. Gemäß diesem Ausführungsbeispiel ist weiterhin der Gefäßboden 300 des Gefäßes 105 dargestellt, der eine Bodendicke 305 aufweist. Alternativ ist das Gefäß 105 unsymmetrisch realisiert oder realisierbar.

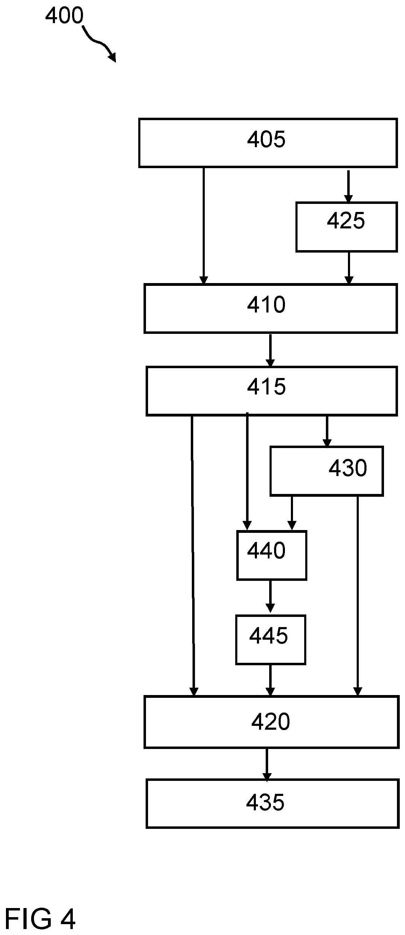

Figur 4 zeigt ein Ablaufdiagramm eines Verfahrens 400 gemäß einem Ausführungsbeispiel zum Berechnen eines Gefäßvolumens eines Gefäßes für einen Getränkeautomaten. Das Verfahren 400 ist beispielsweise in einem Getränkeautomaten durchführbar, wie er beispielsweise in zumindest einer der Figuren 1 oder 2 beschrieben wurde. Durch das Verfahren 400 ist es möglich, das Gefäßvolumen beispielsweise eines unsymmetrischen Gefäßes zu berechnen. Das Verfahren 400 umfasst dazu einen Schritt 405 des Erfassens, einen Schritt 410 des Ausgebens, einen Schritt 415 des Ermittelns und einen Schritt 420 des Berechnens. Im Schritt 405 des Erfassens wird eine Gefäßaußenhöhe des Gefäßes über eine Schnittstelle zu einer Sensoreinrichtung des Getränkeautomaten erfasst. Im Schritt 410 des Ausgebens wird eine bestimmte Flüssigkeitsmenge über einen Auslauf des Getränkeautomaten in das Gefäß ausgegeben. Im Schritt 415 des Ermittelns wird zumindest eine Restinnenhöhe des Gefäßes ermittelt, wobei die Restinnenhöhe einen Restabstandswert zwischen einer Flüssigkeitsoberfläche der ausgegebenen Flüssigkeitsmenge und einem Gefäßrand repräsentiert. Im Schritt 420 des Berechnens wird das Gefäßvolumen unter Verwendung der bestimmten Flüssigkeitsmenge und der Restinnenhöhe berechnet.

Gemäß diesem Ausführungsbeispiel wird im Schritt 410 des Ausgebens die bestimmte Flüssigkeitsmenge ausgegeben, die zwischen 4 ml und 12 ml umfasst. Insbesondere umfasst die Flüssigkeitsmenge 8 ml. Beispielsweise entspricht diese Menge zwei von dem Durchflusssensor, der auch als Flowmeter bezeichnet ist, gemessenen Impulsen. Weiterhin wird im Schritt 420 des Berechnens eine Wahrscheinlichkeit für das Gefäßvolumen berechnet. Lediglich optional wird der Schritt 410 des Ausgebens der bestimmten Flüssigkeitsmenge, der Schritt 415 des Ermittelns der Restinnenhöhe und/oder der Schritt 420 des Berechnens des Gefäßvolumens wiederholt durchgeführt.

Gemäß diesem Ausführungsbeispiel umfasst das Verfahren 400 lediglich optional einen Schritt 425 des Ermittelns einer Gefäßinnenhöhe des Gefäßes unter Verwendung der Gefäßaußenhöhe. Der Schritt 425 des Ermittelns wird dabei nach dem Schritt 405 des Erfassens der Gefäßaußenhöhe durchgeführt. Die Gefäßinnenhöhe repräsentiert gemäß diesem Ausführungsbeispiel einen Innenabstandswert zwischen einem Gefäßboden und dem Gefäßrand des Gefäßes. Weiterhin optional umfasst das Verfahren 400 einen Schritt 430 des Bereitstellens eines Einstellsignals an eine Schnittstelle zu einem Brühgutliefereinheit des Getränkeautomaten unter Verwendung des Restabstandswerts nach dem Schritt 415 des Ermittelns, um eine Brühgutmenge für das Gefäß einzustellen. Im Schritt 430 des Bereitstellens wird die Brühgutmenge durch das Einstellsignal während eines Brühvorgangs eingestellt, um den Geschmack eines Getränks anzupassen. Das bedeutet, dass beispielsweise eine Intensität und/oder ein Mischverhältnis für ein Getränk bei einem großen Gefäß anders eingestellt wird als beispielsweise bei einer Espressotasse. Weiterhin umfasst das Verfahren 400 gemäß diesem Ausführungsbeispiel einen Schritt 435 des Speicherns des berechneten Gefäßvolumens. Das bedeutet, dass der errechnete Wert beispielsweise in einer Speichereinheit des Getränkeautomaten nach dem Schritt 420 des Berechnens hinterlegt wird und für zukünftige Getränkebezüge abrufbar bleibt. Gemäß diesem Ausführungsbeispiel umfasst das Verfahren 400 einen weiteren Schritt 440 des Ausgebens einer vorbestimmten weiteren Flüssigkeitsmenge und einen weiteren Schritt 445 des Ermittelns zumindest einer weiteren Restinnenhöhe. Dabei repräsentiert die weitere Restinnenhöhe einen Flüssigkeitsabstandswert zwischen der Flüssigkeitsoberfläche und dem Gefäßrand. Ferner ist die weitere Restinnenhöhe kleiner als die Restinnenhöhe. Im Schritt 420 des Berechnens wird das Gefäßvolumen demnach unter Verwendung der bestimmten weiteren Flüssigkeitsmenge und/oder der weiteren Restinnenhöhe berechnet. Lediglich optional wird der weitere Schritt 445 des Ermittelns der Restinnenhöhe nach einem Ablauf einer angegebenen Zeitspanne durchgeführt, insbesondere wobei die angegebene Zeitspanne 0,5 bis 1 Sekunde beträgt.

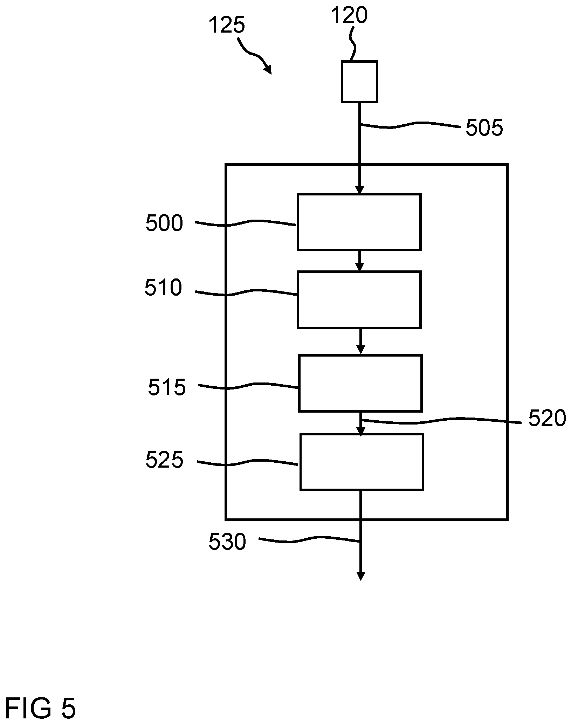

Figur 5 zeigt ein Blockschaltbild einer Steuereinheit 125 für einen Getränkeautomaten gemäß einem Ausführungsbeispiel. Die Steuereinheit 125 ist dabei in einem Getränkeautomaten einsetzbar, wie er beispielsweise in einer der Figuren 1 oder 2 beschrieben wurde. Die Steuereinheit 125 ist dabei ausgebildet, um ein Verfahren zum Berechnen eines Gefäßvolumens eines Gefäßes für einen Getränkeautomaten durchzuführen oder anzusteuern, wie es beispielsweise in Figur 4 beschrieben wurde. Dazu weist die Steuereinheit 125 gemäß diesem Ausführungsbeispiel eine Erfassungseinheit 500 auf, die ausgebildet ist, um eine Gefäßaußenhöhe 505 des Gefäßes über eine Schnittstelle zu einer Sensoreinrichtung 120 des Getränkeautomaten zu erfassen. Weiterhin weist die Steuereinheit 125 eine Ausgabeeinheit 510 auf, die ausgebildet ist, um ein Ausgeben einer bestimmten Flüssigkeitsmenge über einen Auslauf des Getränkeautomaten in das Gefäß zu bewirken. Weiterhin weist die Steuereinheit 125 gemäß diesem Ausführungsbeispiel eine Ermittlungseinheit 515 auf, die ausgebildet ist, um zumindest eine Restinnenhöhe 520 des Gefäßes zu ermitteln, wobei die Restinnenhöhe 520 einen Restabstandswert zwischen einer Flüssigkeitsoberfläche der ausgegebenen Flüssigkeitsmenge und einem Gefäßrand repräsentiert. Gemäß diesem Ausführungsbeispiel weist die Steuereinheit 125 eine Recheneinheit 525 auf, die ausgebildet ist, um das Gefäßvolumen 530 unter Verwendung der bestimmten Flüssigkeitsmenge und der Restinnenhöhe 515 zu berechnen.

In anderen Worten ausgedrückt ist die Steuereinheit 125 ausgebildet, um beispielsweise aus zwei Impulsen, die optional 8 ml entsprechen, und der Restinnenhöhe 520 das Gefäßvolumen 530 des Gefäßes zu berechnen. In regelmäßigen Abständen erfolgt dabei ein Abgleich der ersten Berechnung mit einer wiederholten Berechnung und lediglich optional eine Korrektur des berechneten Gefäßvolumens 530. Anhand des berechneten und/oder geschätzten Gefäßvolumens 530 erfolgt eine Geschmacksanpassung.

## Patentansprüche

1. Verfahren (400) zum Berechnen eines Gefäßvolumens (530) eines Gefäßes (105) für einen Getränkeautomaten (100) mit Hilfe einer Steuereinheit (125), wobei das Verfahren (400) die folgenden Schritte umfasst:
- Erfassen (405) einer Gefäßaußenhöhe (210) des Gefäßes (105) über eine Schnittstelle zu einer Sensoreinrichtung (120) des Getränkeautomaten (100);
- Ausgeben (410) einer bestimmten Flüssigkeitsmenge über einen Auslauf (110) des Getränkeautomaten (100) in das Gefäß (105);
- Ermitteln (415) zumindest einer Restinnenhöhe (520) des Gefäßes (105), wobei die Restinnenhöhe (520) einen Restabstandswert zwischen einer Flüssigkeitsoberfläche der ausgegebenen Flüssigkeitsmenge in dem Gefäß (105) und einem Gefäßrand (212) repräsentiert; und
- Berechnen (420) des Gefäßvolumens (530) unter Verwendung der bestimmten Flüssigkeitsmenge und der Restinnenhöhe (520).

2. Verfahren (400) gemäß Anspruch 1, mit einem Schritt (425) des Ermittelns einer Gefäßinnenhöhe des Gefäßes (105) unter Verwendung der Gefäßaußenhöhe (210) nach dem Schritt (405) des Erfassens der Gefäßaußenhöhe (210), wobei die Gefäßinnenhöhe einen Innenabstandswert zwischen einem Gefäßboden (300) und dem Gefäßrand (212) des Gefäßes (105) repräsentiert.

3. Verfahren (400) gemäß einem der vorangegangenen Ansprüche, wobei im Schritt (420) des Berechnens ein Wahrscheinlichkeitswert für das Gefäßvolumen (530) berechnet wird.

4. Verfahren (400) gemäß einem der vorangegangenen Ansprüche, wobei im Schritt (410) des Ausgebens die bestimmte Flüssigkeitsmenge ausgegeben wird, die zwischen 4 ml und 12 ml umfasst, insbesondere wobei die Flüssigkeitsmenge 8 ml umfasst.

5. Verfahren (400) gemäß einem der vorangegangenen Ansprüche, mit einem Schritt (430) des Bereitstellens eines Einstellsignals an eine Schnittstelle zu einem Brühgutliefereinheit (150) des Getränkeautomaten (100) unter Verwendung des Restabstandswerts, um eine Brühgutmenge für eine Getränkeausgabe in das Gefäß (105) einzustellen.

6. Verfahren (400) gemäß Anspruch 5, wobei im Schritt (430) des Bereitstellens durch das Einstellsignal die Brühgutmenge während eines Brühvorgangs eingestellt oder verändert wird, um den Geschmack eines Getränks anzupassen.

7. Verfahren (400) gemäß einem der vorangegangenen Ansprüche, mit einem Schritt (435) des Speicherns des berechneten Gefäßvolumens (530).

8. Verfahren (400) gemäß einem der vorangegangenen Ansprüche, mit einem weiteren Schritt (440) des Ausgebens einer vorbestimmten weiteren Flüssigkeitsmenge, und mit einem weiteren Schritt (445) des Ermittelns zumindest einer weiteren Restinnenhöhe, wobei die weitere Restinnenhöhe einen Flüssigkeitsabstandswert zwischen der Flüssigkeitsoberfläche und dem Gefäßrand (212) repräsentiert, wobei die weitere Restinnenhöhe kleiner ist als die Restinnenhöhe (520), und wobei im Schritt (420) des Berechnens das Gefäßvolumen (530) unter Verwendung der bestimmten weiteren Flüssigkeitsmenge und/oder der weiteren Restinnenhöhe berechnet wird.

9. Verfahren (400) gemäß Anspruch 8, wobei der weitere Schritt (445) des Ermittelns der weiteren Restinnenhöhe nach einem Ablauf einer angegebenen Zeitspanne durchgeführt wird, insbesondere wobei die angegebene Zeitspanne 0,5 bis 1 Sekunde beträgt.

10. Steuereinheit (125), die mit einer Sensoreinrichtung (120) eines Getränkeautomaten (100) verbunden und ausgebildet ist, um die Schritte (405, 410, 415, 420, 425, 425, 430, 440, 445) des Verfahrens (400) gemäß einem der vorangegangenen Ansprüche in entsprechenden Einheiten (500, 510, 515, 525) auszuführen und/oder anzusteuern.

11. Steuereinheit (125) nach Anspruch 10 , umfassend ein Computer-Programmprodukt mit Programmcode zur Durchführung des Verfahrens (400) nach einem der Ansprüche 1 bis 9, wenn das Computer-Programmprodukt auf einer Steuereinheit (125) gemäß Anspruch 10 ausgeführt wird.

12. Getränkeautomat (100) zum Ausgeben eines Getränks in ein Gefäß (105), wobei der Getränkeautomat (100) die folgenden Merkmale aufweist:
- eine Sensoreinrichtung (120) zum Erfassen einer Gefäßaußenhöhe (210) des Gefäßes (105);
- einen Auslauf (120) zum Ausgeben einer Flüssigkeit in das Gefäß (105); und
- eine Steuereinheit (125) gemäß Anspruch 10 oder 11.

13. Getränkeautomat (100) gemäß Anspruch 12, wobei die Sensoreinrichtung (120) ausgebildet ist, um mittels einer Wippe, eines Lichtsensors und/oder mittels Motorstrom die Gefäßaußenhöhe (210) zu erfassen.

## Claims

1. Method (400) for calculating a vessel volume (530) of a vessel (105) for a beverage machine (100) with the aid of a control unit (125), wherein the method (400) comprises the following steps:
- detecting (405) a vessel outer height (210) of the vessel (105) via an interface with a sensor device (120) of the beverage machine (100);
- dispensing (410) a specified quantity of liquid via an outlet (110) of the beverage machine (100) into the vessel (105);
- determining (415) at least one remainder internal height (520) of the vessel (105), wherein the remainder internal height (520) represents a remainder distance value between a liquid surface of the dispensed liquid quantity in the vessel (105) and a vessel rim (212); and
- calculating (420) the vessel volume (530) by using the specified quantity of liquid and the remainder internal height (520).

2. Method (400) according to claim 1, comprising a step (425) of determining a vessel internal height of the vessel (105) by using the vessel external height (210) after the step (405) of detecting the vessel external height (210), wherein the vessel internal height represents an internal distance value between a vessel bottom (300) and the vessel rim (212) of the vessel (105).

3. Method (400) according to any of the preceding claims, wherein, in the calculation step (420), a probability value for the vessel volume (530) is calculated.

4. Method (400) according to any of the preceding claims, wherein, in the dispensing step (410), the specified quantity of liquid is dispensed, which comprises between 4 ml and 12 ml, in particular wherein the quantity of liquid comprises 8 ml.

5. Method (400) according to any of the preceding claims, comprising a step (430) of providing an adjustment signal on an interface with a brewed product delivery unit (150) of the beverage machine (100) by using the remainder distance value to adjust a brewed product quantity for dispensing a beverage into the vessel (105).

6. Method (400) according to claim 5, wherein, in the provision step (430), the quantity of brewed product is adjusted or changed by the adjustment signal during a brewing process in order to adapt the flavour of a beverage.

7. Method (400) according to any of the preceding claims, comprising a step (435) of storing the calculated vessel volume (530).

8. Method (400) according to any of the preceding claims, comprising a further step (440) of dispensing a pre-specified further quantity of liquid, and comprising a further step (445) of determining at least one further remainder internal height, wherein the further remainder internal height represents a liquid distance value between the liquid surface and the vessel rim (212), wherein the further remainder internal height is less than the remainder internal height (520), and wherein, in the calculation step (420), the vessel volume (530) is calculated by using the specified further quantity of liquid and/or the further remainder internal height.

9. Method (400) according to claim 8, wherein the further step (445) of determining the further remainder internal height is carried out after a given time period has elapsed, in particular wherein the given time period is 0.5 to 1 second.

10. Control unit (125) which is connected to a sensor device (120) of a beverage machine (100) and configured to execute and/or control the steps (405, 410, 415, 420, 425, 425, 430, 440, 445) of the method (400) according to any of the preceding claims in corresponding units (500, 510, 515, 525).

11. Control unit (125) according to claim 10, comprising a computer program product having program code for carrying out the method (400) according to any of claims 1 to 9 when the computer program product is run on a control unit (125) according to claim 10.

12. Beverage machine (100) for dispensing a beverage into a vessel (105), wherein the beverage machine (100) has the following features:
- a sensor device (120) for detecting a vessel outer height (210) of the vessel (105);
- an outlet (120) for dispensing a liquid into the vessel (105); and
- a control unit (125) according to claim 10 or 11.

13. Beverage machine (100) according to claim 12, wherein the sensor device (120) is configured to detect the vessel outer height (210) by means of a rocker, a light sensor, and/or by means of a motor current.

## Revendications

1. Procédé (400) permettant de calculer un volume de récipient (530) d'un récipient (105) pour un distributeur automatique de boissons (100) à l'aide d'une unité de commande (125), dans lequel le procédé (400) comprend les étapes suivantes :
- détection (405) d'une hauteur extérieure de récipient (210) du récipient (105) par l'intermédiaire d'une interface avec un dispositif formant capteur (120) du distributeur automatique de boissons (100) ;
- distribution (410) d'une quantité de liquide définie dans le récipient (105) par l'intermédiaire d'une sortie (110) du distributeur automatique de boissons (100) ;
- détermination (415) d'au moins une hauteur intérieure résiduelle (520) du récipient (105), dans lequel la hauteur intérieure résiduelle (520) représente une valeur de distance résiduelle entre une surface de liquide de la quantité de liquide distribuée dans le récipient (105) et un bord de récipient (212) ; et
- calcul (420) du volume de récipient (530) en utilisant la quantité de liquide définie et la hauteur intérieure résiduelle (520).

2. Procédé (400) selon la revendication 1, comportant une étape (425) de détermination d'une hauteur intérieure de récipient du récipient (105) en utilisant la hauteur extérieure de récipient (210) après l'étape (405) de détection de la hauteur extérieure de récipient (210), dans lequel la hauteur intérieure de récipient représente une valeur de distance intérieure entre un fond de récipient (300) et le bord de récipient (212) du récipient (105).

3. Procédé (400) selon l'une des revendications précédentes, dans lequel, à l'étape (420) de calcul, une valeur de probabilité pour le volume de récipient (530) est calculée.

4. Procédé (400) selon l'une des revendications précédentes, dans lequel, à l'étape (410) de distribution, la quantité de liquide définie est distribuée, laquelle comprend entre 4 ml et 12 ml, en particulier dans lequel la quantité de liquide comprend 8 ml.

5. Procédé (400) selon l'une des revendications précédentes, comportant une étape (430) de fourniture d'un signal de réglage à une interface avec une unité d'approvisionnement en produit à infuser (150) du distributeur automatique de boissons (100) en utilisant la valeur de distance résiduelle afin de régler une quantité de produit à infuser pour une distribution de boisson dans le récipient (105).

6. Procédé (400) selon la revendication 5, dans lequel, à l'étape (430) de fourniture, la quantité de produit à infuser est réglée ou modifiée par le signal de réglage pendant un processus d'infusion afin d'ajuster le goût d'une boisson.

7. Procédé (400) selon l'une des revendications précédentes, comportant une étape (435) de stockage du volume de récipient (530) calculé.

8. Procédé (400) selon l'une des revendications précédentes, comportant une étape supplémentaire (440) de distribution d'une quantité de liquide supplémentaire prédéfinie, et comportant une étape supplémentaire (445) de détermination d'au moins une hauteur intérieure résiduelle supplémentaire, dans lequel la hauteur intérieure résiduelle supplémentaire représente une valeur de distance de liquide entre la surface de liquide et le bord de récipient (212), dans lequel la hauteur intérieure résiduelle supplémentaire est inférieure à la hauteur intérieure résiduelle (520), et dans lequel, à l'étape (420) de calcul, le volume de récipient (530) est calculé en utilisant la quantité de liquide supplémentaire définie et/ou la hauteur intérieure résiduelle supplémentaire.

9. Procédé (400) selon la revendication 8, dans lequel l'étape supplémentaire (445) de détermination de la hauteur intérieure résiduelle supplémentaire est exécutée après l'écoulement d'un laps de temps indiqué, en particulier dans lequel le laps de temps indiqué va de 0,5 à 1 seconde.

10. Unité de commande (125) connectée à un dispositif formant capteur (120) d'un distributeur automatique de boissons (100) et configurée pour exécuter et/ou commander les étapes (405, 410, 415, 420, 425, 425, 430, 440, 445) du procédé (400) selon l'une des revendications précédentes dans des unités (500, 510, 515, 525) correspondantes.

11. Unité de commande (125) selon la revendication 10, comprenant un produit-programme informatique comportant un code de programme pour la réalisation du procédé (400) selon l'une des revendications 1 à 9 lorsque le produit-programme informatique est exécuté sur une unité de commande (125) selon la revendication 10.

12. Distributeur automatique de boissons (100) pour la distribution d'une boisson dans un récipient (105), dans lequel le distributeur automatique de boissons (100) présente les caractéristiques suivantes :
- un dispositif formant capteur (120) pour la détection d'une hauteur extérieure de récipient (210) du récipient (105) ;
- une sortie (120) pour la distribution d'un liquide dans le récipient (105) ; et
- une unité de commande (125) selon la revendication 10 ou 11.

13. Distributeur automatique de boissons (100) selon la revendication 12, dans lequel le dispositif formant capteur (120) est configuré pour détecter la hauteur extérieure de récipient (210) au moyen d'une bascule, d'un capteur de lumière et/ou au moyen d'un courant moteur.
